# EUROPEAN PATENT APPLICATION

(11) **EP 4 578 543 A1**
(43) Date of publication of application: **02.07.2025**
(21) Application number: 23220818.1
(22) Date of filing: 29.12.2023
(51) Int. Cl.: B01J 20/22

(54) **METAL-ORGANIC FRAMEWORK BODIES**

(71) Applicant: Immaterial Ltd, Cambridge CB4 0FW (GB)
(72) Inventor: BABU, Robin, Cambridge, CB4 0FW (GB); CAMUR, Ceren, Cambridge, CB4 0FW (GB); BOIX I SOLER, Gerard, Cambridge, CB4 0FW (GB); KUMAR, Naveen, Cambridge, CB4 0FW (GB); PRASAD, Ram, Cambridge, CB4 0FW (GB); FAIREN-JIMENEZ, David, Cambridge (GB)
(74) Representative: Patent Boutique LLP

(57) **Abstract**

The invention relates to a metal-organic framework (MOF) body or bodies. The, or each, MOF body comprises MOF crystallites and organic polymeric binder. The MOF crystallites comprise MOF comprising a plurality of metal ions and a plurality of organic ligands. The MOF crystallites have a mean particle size of from about 20 nm to about 400 nm, and the, or each, MOF body comprises less than about 20% binder by weight of the, or each, MOF body. The invention further relates to *inter alia* compositions comprising said MOF bodies, methods for manufacturing said MOF bodies and uses for said MOF bodies.

## Description

### Field of the Invention

The present invention relates to a metal-organic framework (MOF) body or bodies, compositions comprising said MOF body or bodies, applications using such body or bodies and methods of preparing said MOF body or bodies.

### Background of the Invention

Metal-organic frameworks (MOFs) are a relatively new class of porous, crystalline materials formed by the reaction of metal ion species with organic ligand molecules by coordination chemistry. MOFs typically have exceptionally high surface areas. The ability to adapt or change the pore sizes and chemistry of the MOF means that many MOFs can be modified to be selective to adsorption of specific species. MOFs are typically made by sol-gel syntheses resulting in fine powders. To be useful in industrial processes these powders typically need to be formed into larger bodies to avoid problems such as compaction and channelling, which reduce fluid flow and performance. These larger bodies need to be mechanically robust and attrition resistant to be industrially useful. They also need to be chemically stable.

Many industrial processes exist to form fine powders into larger bodies, such as tablets or extrudates, typically by the application of high mechanical pressure or use of a binder material, or both. However, these processes very often reduce the adsorbent properties of the adsorbent material. The application of high mechanical pressures, e.g., as often required in tabletting processes, can destroy the internal pores of the adsorbent material. This is especially relevant for MOFs that have coordination chemistry bonds and are typically less mechanically robust. Achieving a high-density MOF adsorbent body simply by application of high mechanical pressures during processing may be counterproductive if doing so causes significant collapse of the internal pores of the adsorbent material.

The ideal adsorbent body may be one that simultaneously meets what can appear to be contradictory requirements. The adsorbent body should be chemically and physically robust. It should ideally have a high surface area to have a good adsorption capacity. The adsorbent body ideally needs to have a high density so as to minimise the volume of adsorbent material required for a given process. This is especially important for applications where space is inherently limited, such as in gas storage vessels on vehicles. These requirements can often seem incompatible. For example, high density seems inconsistent with high porosity/surface area. High levels of binders, often required for robustness, reduce adsorption capacity of an adsorbent body by reducing the amount of adsorbent material present in the body. High levels of binders applied as solutions or liquids can block the pores of an adsorbent material, such as a MOF, and thus reduce performance. However, the mechanical robustness of adsorbent bodies is typically not high enough if no, or low levels of binder are used, especially for more demanding applications.

An alternative to tabletting is extrusion of the porous material, typically with a plasticiser and/or binder. However, the use of a binder can bring other problems and is not straightforward. High levels of particulate binders such as alumina reduce performance of the adsorbent body by reducing the amount of adsorbent material in the body. Additionally or alternatively, high levels of binders applied as solutions or liquids will very typically block the pores of the adsorbent material and reduce performance. Whereas, the mechanical robustness of adsorbent bodies, such as their resistance to attrition and abrasion, is typically not high enough if no, or even low levels of binder are used.

A further issue for MOFs can be that of chemical stability, including resistance to water. Some MOFs can hydrolyse, or otherwise become less crystalline, in the presence of water. This can be an issue since some applications, such as carbon capture from flue gas or air purification, will inevitably bring the MOF material into contact with moisture as well as the target adsorbate. MOF bodies with improved stability in the presence of water are consistently of interest.

The present invention addresses these and other problems associated with known MOF bodies.

### Summary of the Invention

Accordingly, in a first aspect, the present invention provides a metal-organic framework (MOF) body or bodies. The, or each, MOF body comprises MOF crystallites and organic polymeric binder. The MOF crystallites comprise MOF comprising a plurality of metal ions and a plurality of organic ligands. The MOF crystallites have a mean particle size of from about 20 nm to about 400 nm, preferably from about 22 nm to about 300 nm, preferably from about 25 nm to about 200 nm, or preferably from about 30 nm to about 100 nm. The, or each, MOF body comprises less than about 20% binder, preferably less than 10%, preferably less than 5% by weight of the, or each, MOF body. Typically, the MOF bodies contain greater than 2% by weight binder (optionally polymeric organic binder) by weight of the, or each, MOF body. The inventors have discovered that controlling the mean particle size of the MOF crystallites within certain limits, in combination with the limited use of a binder, enables MOF bodies having a high density, high surface area and good physical robustness due to the efficient packing of the crystallites which also enables a high binder efficacy. Many MOFs have similar crystallite shapes so this invention is very broadly applicable.

Preferably, the plurality of metal ions may (as a plurality) consist essentially of (that is to say, substantially, all of the metal ions within are the same), or consist of, ions of a metal selected from the group consisting of: zirconium, iron, zinc, aluminium, copper, cobalt, magnesium, chromium, titanium, nickel, manganese, magnesium, ruthenium, potassium, thorium, hafnium, gadolinium, neodymium, ytterbium, erbium and mixtures thereof.

The organic ligands in the MOFs according to the present invention may be multidentate. A multidentate organic ligand is an organic ligand capable of donating two or more pairs of electrons in a complexation reaction to form two or more coordinate bonds. The organic ligands may comprise two or more oxygen and/or nitrogen atoms suitable for donating a pair of electrons to form the two or more coordinate bonds. Preferably, the oxygen atoms may be present as carboxylate or nitro groups. Preferably, the nitrogen atoms may be present as amine groups. Typically, the plurality of organic ligands may be an aromatic carboxylate, an aromatic amine and/or an aromatic nitro.

Suitable ligands include but are not limited to 4,4'-bipyridine, imidazole; 2-methylimidazole; 2-ethylimidazole; 2-nitroimidazole; benzimidazole; purine; 1,2,4-triazole, 3-Methyl-1H, 1, 2, 4 triazole , terephthalic acid, 2-aminoterepthalic acid, 2-bromoterephthalic acid, 2-nitroterephthalic acid, 1,3,5-benzenetricarboxylic acid, 2-hydroxyterephthalic acid, 2,5-dihydroxy terephthalic acid, citric acid, oxalic acid, fumaric acid, 3,5-dimethyl-1,2,4-troiazole, pyrazine, Nicotinic acid, Isonicotinic acid, 1-H-pyrazole-3,5-dicarboxylate, biphenyl-4,4-dicarboxylic acid, naphthalene-2,6-dicarboxylic acid, 4,4'-terphenyldicarboxylate, benzene-1,2,4,5-tetracarboxylic acid, tetracarboxyphenyl porphyrin, 2,5-furandicarboxylic acid, 4,4'-azo-1,2,4-triazole, N,N-Bis(1H-tetrazole-5-yl)-amine, 1,2-bis(4-pyridyl)ethane; 1,2-di(pyridine-4-yl)ethane-1,2-diol; 3-[(trimethylsilyl)ethynyl]-4-[2-(4-pyridinyl)ethenyl]pyridine; 1,2-bis(4-pyridyl)ethyne; 1,4-bis(4 pyridyl)benzene; 3,6-di(pyridin-4-yl)-1,2,4,5-tetrazine; 4-(9-(pyridin-4-yl)anthracen-10-yl)pyridine; 4,4'-bis(4-pyridyl)biphenyl; N,N'-bis(4-pyridyl)pyromellitic diimide; N,N'-di(pyridyl)-1,4,5,8-naphthalenetetracarboxydiimide; 4,4'-bipyrazolyl; 1,4-bis(1H-pyrazol-4-yl)benzene; 4,4'-buta-1,3-diyne-1,4-diylbis(1H-pyrazole); N,N'-bis(1H-pyrazol-4-yl)pyromellitic diimide; N,N'-bis(1H-pyrazol-4-yl)-1,4,5,8-naphthalenetetracarboxydiimide; 4,4'-bis(1H-pyrazol-4-yl)biphenyl; N,N'-bis(1H-pyrazol-4-yl)-1,4-benzenedicarboxamide; 4,4'-benzene-1,4-diylbis(1H-pyrazole); tetrakis (4-carboxyphenyl)porphyrin (TCPP), 1,4-benzenedicarboxylic acid (BDC), 1,3,5-benzenetricarboxylic acid (H₃BTC), 1,3,5,8- (p-benzoate)pyrene linkers (H₄TBAPy), 4',4‴,4ʺ‴,4‴ʺʺ-(ethene-1,1,2,2- tetrayl)tetrakis(([1,1'-biphenyl]-3-carboxylic acid)) (H₄ETTC). The organic ligand may be selected from this listed ligands or combinations thereof.

The mean particle size of the MOF crystallites in the or each body may be measured according to different techniques depending on whether the crystallites are being measured in the reaction mix or once formed into the body. The mean particle size of the crystallites can be changed by altering the synthesis conditions for making the MOF, such as changing reactant concentrations, temperatures, levels of modulators, applied levels of shear during synthesis, reaction time and other process parameters which will be familiar to those skilled in the art. The size of the crystallites is not typically altered by milling of MOF powder. Instead such milling is typically used to break up secondary structures formed by aggregates of the crystallites. The particle size refers to the hydrodynamic diameter, which can be defined as the radius of a hypothetical sphere that diffuses at the same rate as the particle under investigation. Suitable techniques, as described herein, include Dynamic Light Scattering (for measurement of MOF crystallite sizes in the reaction mixes where the reaction mix is a solution or a paste or a gel) and small angle X-ray scattering (SAXS) for analysis of crystallites in the solid adsorbent body. Optical image analysis techniques (microscopic analysis) are also suitable for analysis of crystallites in the solid adsorbent body (although SAXS is preferred).

The MOF crystallites have a mean particle size of from about 20 nm to about 400 nm, preferably from about 22 nm to about 300 nm, preferably from about 25 nm to about 200 nm or preferably from about 30 nm to about 100 nm.

The Inventors have found that MOF crystallites having a particle size of less than 20 nm or even less than 30 nm are likely to be unable to achieve fully formed crystallinity within the crystallite. Boundary and edge effects are significant. This results in a MOF crystallite having multiple crystalline defects and a reduced porosity. Such MOF materials have a lower surface area than a fully crystallite MOF material so very small crystallites will typically have a smaller surface area. Furthermore, smaller MOF crystallites are known to be more susceptible to degradation.

MOF crystallites having a mean particle size of greater than 400 nm are likely to result in poorer crystallite packing within the MOF body. The packing efficiency typically increases as crystallite mean particle size decreases, such as less than 300 nm or 200 nm or 100 nm. In addition, the larger the MOF crystallite, the larger the interstitial gaps between the MOF crystallites resulting in proportionally less contact between the MOF crystallites and poorer MOF crystallite packing. This can typically be seen in the macroporosity of the MOF body with the inventive bodies having lower levels of unwanted macroporosity. The larger macropores do not contribute significantly to the sorbent ability of an adsorbent body and just lower the density. Macropores referto pores having a size of greater than about 50 nm. The macropores have very little adsorbent capacity and do not contribute to the adsorbent capacity of the MOF body. The MOF body preferably has a volume of macropores of about 15% or less of the envelope volume of the MOF body, the volume of macropores may be about 12% or less, such as about 10% or less, for example about 7% or less, such as about 5% or less, of the envelope volume of the MOF body.

Higher levels of polymeric binder are typically needed with larger crystallite sizes to ensure high levels of robustness.

MOF crystallites having a mean particle size of greater than 400 nm therefore typically require higher binder levels to hold the crystallites together to form the MOF body. This higher level of binder inherently reduces the amount of MOF present in the body and hence the adsorption capacity of the body. All of this combines to mean that MOF bodies formed from MOF crystallites having a mean particle size of greater than 400 nm typically have a lower density, higher level of macroporosity and higher binder levels.

Thus, the Inventors have found that a MOF body or bodies according to the present invention which comprise MOF crystallites having a mean particle size of from about 20 nm to about 400 nm and particularly from about 30 nm to about 100nm with low binder levels surprisingly display optimal crystallite packing and advantageously provide stable, robust bodies having a high density.

Preferably, the MOF crystallites have a mean particle size of from about 30 nm to about 100 nm.

In a preferred embodiment, the invention provides a metal-organic framework (MOF) body or bodies, wherein the or each MOF body comprises MOF crystallites and binder; wherein the MOF crystallites comprise MOF comprising a plurality of metal ions and a plurality of organic ligands; wherein the MOF crystallites have a mean particle size of from about 30 nm to about 100 nm; wherein the or each MOF body comprises less than about 20% binder by weight of the or each MOF body. Embodiments related to each aspect of the invention apply equally to this embodiment of the invention.

MOF crystallites having a mean particle size of from about 30 nm to about 100 nm are particularly advantageous as such crystallites are able to achieve fully formed crystallinity and efficient crystallite packing as described above, resulting in MOF bodies having low binder levels and high density.

Typically, the, or each, MOF body comprises greater than about 80% MOF, or greater than about 90% MOF, or greater than about 95% MOF, or greater than about 97% MOF, or greater than about 98% by weight of the or each MOF body.

Preferably, the, or each, MOF body comprises less than about 15% binder, or less than about 10% binder, or less than about 5% binder, or less than about 2% binder by weight of the or each MOF body.

Preferably, the, or each, MOF body comprises from about 1% to about 20% binder by weight of the or each MOF body, preferably from about 2% to about 10% binder by weight of the or each MOF body. The presence of binder is typically required to ensure the robustness of the MOF body.

When the mean particle size of the MOF crystallites is less than about 400 nm, the level of binder may be less than about 20% by weight of the, or each, MOF body, or less than about 10% by weight of the or each MOF body, or less than about 5% by weight of the or each MOF body. Smaller mean particle sizes enable the use of lower levels of binder whilst still ensuring adequate body robustness and stability.

The binder may be any material that is used to hold MOF crystallites together to form the MOF body. The MOF crystallites may be adhered to each other with the binder.

Preferably, the binder may be an inorganic binder, an organic binder or a combination thereof. The inorganic binder may be alumina (aluminium oxide), such as hydrated alumina, Bentonite, Lime (Calcium Oxide), Silica (Silicon Dioxide), Portland Cement, Gypsum (Calcium Sulfate), Sodium Silicate, Magnesium Oxide, Iron Oxide, Zinc Oxide, and combinations thereof.

The organic binder may be a polymeric organic binder. Preferably, the binder is polymeric organic binder. The polymeric organic binder may be selected from the group consisting of: polyvinyl alcohol (PVA), polyvinyl acetate, polyethyleneimine, polyvinyl pyrrolidone, polyimide (PI), polyvinyl formal, polyacrylic acid and salts thereof, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefins, polyamide, chitosan, cellulose acetate, hydroxypropyl methyl cellulose (HPMC), methyl cellulose, hydroxyethyl cellulose, hydroxypropyl methylcellulose phthalate (HPMCP), and any combination thereof.

The binder may be water soluble or water insoluble. When the binder is an organic binder, the binder may be the same as the organic ligand comprised in the MOF. Alternatively, the binder may be different to the organic ligand comprised in the MOF.

The MOF crystallites comprised in the MOF body or bodies may be a single MOF crystallite. Alternatively, the MOF crystallites comprised in the MOF body or bodies may be a mixture of MOF crystallites. For example, the MOF crystallites may be selected from the group consisting of HKUST-1, ZIF-8, UTSA-16, CALF-20, ZU-301, UiO-66, MOF-303, Al-fumarate, Zr-fumarate, Al-formate, MOF-808, NbOFFIVE, TIFSIX, CPO-27, UiO-66, MIL-160 and combinations thereof.

Preferably, the MOF contains metal ions selected from one or more of: Zn²⁺, Zr²⁺, Cu²⁺, Al³⁺, Mn²⁺, Mg²⁺, Nb²⁺, Fe²⁺, Fe³⁺, Ti²⁺, Ti³⁺, Ti⁴⁺, Co²⁺, Cr²⁺, Ni²⁺ and Ca²⁺ and mixtures thereof. Suitable MOFs include, but are not limited to, the MOFs listed or mentioned below.

For the purpose of clarity, references to a MOF include derivatives of that MOF with the same structure, including derivatives of the ligands and changes to the metal ions used as well as combinations and mixtures thereof. For example, a reference to CPO-27/MOF-74 would include CPO-27-Ni, CPO-27-Mg, CPO-27-Mn, CPO-27-Zn and CPO-27-Cu as well as ligand functionalised variations thereof, such as CPO-27-Mg-NH₂, and other variants unless specified otherwise.

Suitable Zr-containing MOFs include UiO-66, UiO-67, UiO-68, NU-1000, PCN-222, MOF-808 and Zr-fumarate.

Suitable Zn-containing MOFs include ZIF-7, ZIF-8, ZIF-67, ZIF-71, ZIF-90. and Zn-containing UTSA-16, CALF-20, and ZU-301.

Suitable Al-containing MOFs include MIL-53, CAU-10, MIL-160(AI), Al-formate, Al-fumarate and AI-soc-MOF-1.

Suitable MOFs of the M(F₆₋ₓ)Lₓfamily include SIFSIX-3-Ni, TIFSIX-3-Ni, NbOFFIVE-1-Ni and SIFSIX-2-Cu-i.

Suitable Cr-based MOFs include MIL-100(Cr), and MIL-101(Cr).

Suitable Cu-based MOFs include HKUST-1 and ROS-17.

Suitable Co-based MOFs include cobalt-based UTSA-16 and derivatives thereof.

Suitable Fe-based MOFs include MIL-100(Fe) and MIL-101(Fe).

Suitable mixed metal MOFs include MOFs based on mixtures of two or more metals selected from Fe, Ti and Zn.

Suitable MOFs can comprise mixed ligand or co-crystallite MOFs wherein the MOF comprises at least two chemically distinct organic ligands bonded to the same metal ion. This feature can help adjust the chemical behaviour of the MOF.

It may be preferred that the two chemically distinct organic ligands are chemical analogues. By chemical analogue, it is meant that the structural aspects of the ligand, specifically the backbone as well as the moieties that are involved in the bonding to metal ions, are the same.

An especially preferred feature is for the chemical distinct organic ligands to be chemical analogues, such that the organic ligands have the same backbone structure but differ from each other due to the functionalisation of the backbone structure. The structural similarity of how the different organic ligand anions bond to the metal ions means that variants of a specific MOF can be formed. If the organic ligands are too dissimilar then the MOF may be amorphous or full of defects.

For example, many MOFs have dicarboxylic acids as their organic ligands. Each carboxylic acid group is involved in bonding to a metal ion. The backbone structure refers to the structure between the two carboxylic acid binding groups. The dimensions of the backbone structure determine the dimensions of the pores formed by the organic ligands connecting with the metal ions. The chemical differences come from functional pendant groups attached to the backbone structure.

Exemplary examples are shown below. In these cases, the backbone structure is (de-protonated) terephthalic acid (A).

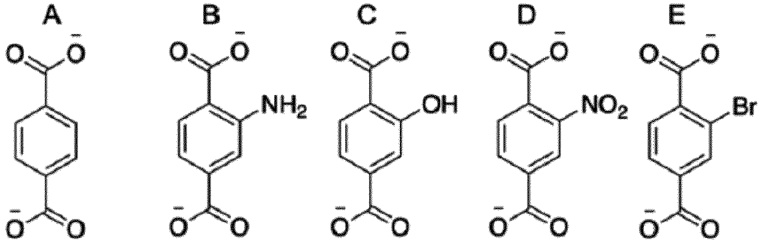

Additional exemplary examples are discussed below. Two exemplary chemical analogues are terephthalic acid (CAS 100-21-0) and 2-aminoterepthalic acid (CAS 10312-55-7). Other exemplary analogues of terephthalic acid include 2-bromoterephthalic acid (CAS 586-35-6), 2-nitroterephthalic acid (CAS 610-29-7), trimellitic acid (CAS 528-44-9), and 2-hydroxyterephthalic acid (CAS 636-94-2).

A further example is the use of blends of 1,2,4-triazole and 3-methyl 1,2,4-triazole with oxalic acid when forming variants of CALF-20. For example, mixes of about 1:3, about 1:1 and about 3:1 of 1,2,4-triazole and 3-methyl 1,2,4-triazole can be used with oxalic acid. Mixtures of 1,2,4-triazole and oxalic acid or 3-methyl 1,2,4-triazole and oxalic acid may be used as ligand.

The use of such chemical analogues allows specific MOFs to be made having variable chemical properties. It may also be preferred that the two chemically distinct organic ligands comprise different backbone structures. The use of organic ligands having different backbone structures can allow for "defects" to be introduced in the body, where the structure of the MOF is incomplete, or allow for more complex MOF structures. These defects can increase porosity in some situations.

Adsorbent bodies comprising mixtures of MOFs can be prepared by mixing different MOF crystallites together prior to adhering with the binder. Suitable MOF adsorbent bodies can comprise mixtures of MOF crystallites made with different ligands. For example, a suitable UiO-66 MOF adsorbent body can comprise mixtures of UiO-66 BDC and UiO-66 BDC-NH₂.

Preferably, the MOF crystallites are adhered to each other with binder. The external surface of the MOF crystallites may be at least partially coated with binder. Alternatively, the external surface of the MOF crystallites may be coated with binder. The binder coating around each MOF crystallite may be present at a depth of from about 1 nm to about 5 nm. This can be measured by X-ray Photoelectron Spectroscopy (XPS). XPS is a surface-sensitive analytical technique used to understand the chemical composition of materials. The depth penetration of XPS is typically limited to the topmost layers of the sample, generally in the range of 1 nm to 10 nm. The exact depth capability can vary depending on factors like the kinetic energy of the photoelectrons and the material's density and atomic number. Higher kinetic energy photoelectrons, resulting from lower binding energy levels or more energetic X-ray sources, can emerge from slightly deeper layers. However, this is still within the order of a few nanometers, reinforcing XPS as a technique predominantly used for surface analysis.

Partially coating or coating of the or each MOF crystallites with binder can have a number of advantages. For example, the coating can improve both the steric stability as well as the moisture stability of the MOF crystallite. Furthermore, coating the MOF crystallites with binder can efficiently use low levels of binder to provide robust, stable MOF bodies having a high density. The binder can be used as efficiently as possible at the contact points between the MOF crystallites having a mean particle size of from about 20 nm to about 400 nm, preferably from about 30 nm to about 100 nm.

The, or each, MOF body may be an extrudate, a milled granule, a tablet or an agglomerate. Optionally, the, or each, MOF body is an extrudate having an aspect ratio of from about 1 to about 7. Preferably, the aspect ratio is from about 2 to about 6 or from about 4 to about 5. The aspect ratio is the ratio of the length of a particle (e.g. extrudate) to the width of the particle (e.g. extrudate). Alternatively, or additionally, the, or each, MOF body may be an extrudate having a cross-sectional diameter of from about 1 mm to about 5 mm, or from about 2 mm to about 4 mm. The aspect ratio and cross-sectional diameter are measured according to the method described herein.

Optionally, the, or each, MOF body is a milled body having a mean body size of greater than about 0.25 mm, preferably greater than about 0.4 mm. Optionally, the, or each, MOF body is a milled body having a mean body size of less than about 1 mm, or less than about 0.8 mm. The mean body size is measured according to the method described herein.

The, or each, MOF body may have a relative density of greater than about 65%, or greater than about 70%, or greater than about 75%, or greater than about 80%, of the theoretical, single-crystal density.

Preferably, the, or each, MOF body has a relative density of from about 0.5 to about 1.2, or from about 0.7 to about 1.1, or about 0.8 to about 1.0. If the envelope density of an adsorbent body is greater than the crystal density (i.e., the relative density is > 1), then this is likely due to the collapse of internal pores. The greater the relative density is above 1, the more the internal pores will have been collapsed and the lower the sorption capacity. Limiting high relative density is necessary to avoid inefficient internal pore collapse. However, the relative density of an adsorbent body should typically not be much less than 1 as this would be volumetrically inefficient. Very low relative densities typically indicate excessive levels of undesirable larger macro-pores.

Typically, the, or each, MOF body has an envelope density of greater than about 0.3 g/cm³, or greater than about 0.4 g/cm³, or greater than about 0.6 g/cm³, or greater than about 0.8 g/cm³, or greater than about 1.0 g/cm³. The or each MOF body may have an envelope density of less than about 1.4 g/cm³, or less than about 1.2 g/cm³. The envelope density is measured as described herein.

Typically, the, or each, MOF body has a BET area of greater than about 400 m²/g, or greater than about 600 m²/g, or greater than about 700 m²/g, as measured by N₂ adsorption at 77 K. The, or each, MOF body may have a BET area of up to about 2000 m²/g, or up to about 1500 m²/g, or up to about 1000 m²/g, or up to about 800 m²/g, as measured by N₂ adsorption at 77 K.

Preferably, the, or each, MOF body has a BET area greater than about 65%, or greater than about 75%, or greater than about 80%, of the BET area of the MOF powder as measured by nitrogen adsorption at 77 K. The, or each, MOF body may have a BET area of less than about 95%, or less than about 90%, or less than about 85%, of the BET area of the MOF powder as measured by nitrogen adsorption at 77 K.

The skilled person will appreciate that in some instances the MOF may not be porous to N2 at 77 K. This will be apparent if tested. In such cases, CO2 isotherms at 20C up to 1 bar are used, and the amount of CO2 adsorbed at 1 bar evaluated. Where a N₂ adsorption analysis may be performed it is preferred over CO2 adsorption. The ranges and values of BET area provided in the preceding paragraphs, and elsewhere in this application, apply mutatis mutandis to MOFs where CO2 adsorption isotherms must be performed in place of nitrogen adsorption.

The macropores of the or each MOF body preferably comprise less than 15% of the envelope volume of the MOF body as measured by mercury intrusion porosimetry. Preferably the macro-porosity is less than 12%, or less than 10%, or less than 7% or even less than 5% of the envelope volume as measured by mercury intrusion porosimetry.

Preferably, the, or each, MOF body has a micro-porosity of greater than 40% of the total pore volume as measured by N2 adsorption. Preferably, the, or each, MOF body has a microporosity of less than about 75% of the total pore volume as measured by N₂ adsorption.

The, or each, MOF body may comprise a material selected from the group consisting of: nanoparticles of metals and metal salts, enzymes, magnetic materials, dyes and pigments, graphene, and any combination thereof.

Suitable nanoparticles include metal and metal oxide nanoparticles selected from Pd, Au, Ru, Rh, Pt, Fe, Sn, Zn, Ti, Pd and any combination thereof. The nanoparticles can be photoactive, such as being photo-catalytically active. Photoactive nanoparticles can include perovskites, especially halogen perovskites. Nanoparticles can be embedded in the MOF body where they can help bind MOF crystallites together or can be trapped within the MOF crystallites. If any nanoparticles are present, then their level in the MOF body is usually less than 0.15% volume of the MOF body.

The MOF bodies of the first aspect of the invention are particularly advantageous as such MOF bodies may have optimal properties, such as improved stability and robustness, as well as a high density and high surface area, even with low levels of binder.

In a second aspect, the invention provides a composition comprising a metal-organic framework body or bodies as defined in the first aspect.

The need to store as much gas as possible in a gas storage vessel of a given volume (as described herein) means that the bulk density of the composition may be very important. The higher the bulk density, the more material that can be packed into the available working volume. The bulk density of a population of bodies is a function of the density of the individual bodies (commonly defined as the envelope density) and how the bodies pack together in the bulk. There is little point in having MOF monolithic bodies with a high individual envelope density if they are of such a shape that they pack together inefficiently. Therefore, a composition with a high bulk density may provide for a gas storage vessel with a high volumetric performance for use in gas storage applications. This may also be related to the surface area of the MOF bodies, so that a composition with a high surface area and a high bulk density may have a high surface area/unit volume, thereby resulting in a composition with a preferable volumetric performance when used in a gas storage vessel.

The bulk density may be defined as the mass of the MOF bodies divided by the total volume occupied by those MOF bodies, or in other words the mass of the composition divided by the total volume occupied by the composition.

The composition may have a bulk density of about 0.3 g/cm³ or greater, for example about 0.5 g/cm³ or greater, such as about 0.6 g/cm³ or greater, for example about 0.7 g/cm³ or greater, such as about 0.8 g/cm³ or greater, for example about 0.9 g/cm³ or greater.

For the avoidance of doubt, the 'bulk density' may refer to the 'untapped density' (i.e. the density of the material or powder as freely settled) or the 'tapped density' (i.e. the maximum density achieved when the material is tapped under specific conditions). Preferably, the bulk density is the tapped density.

The untapped density and the tapped density may be similar. For example, extrudates typically have high aspect ratios and poor packing, and therefore tapping may have little effect on the bulk density.

The composition may comprise at least about 50%, or at least about 60%, or at least about 70%, or at least about 80%, or at least about 90%, or at least about 95%, or at least about 97%, or at least about 99%, of the or each MOF body by weight of the composition.

The composition may comprise less than about 99%, or less than about 97%, or less than about 95%, or less than about 90%, or less than about 80%, of the or each MOF body by weight of the composition.

The composition may comprise from about 50% to about 99%, or from about 60% to about 97%, or from about 70% to about 95%, or from about 80% to about 90%, of the or each MOF body by weight of the composition.

Optionally, the composition may comprise one type of MOF body. Alternatively, the composition may comprise more than one type of MOF body, such as two types of MOF bodies or even three types of MOF bodies. The first and second MOF bodies may have the same, similar, or different properties to one another. The different MOF bodies may have the same or different MOF body properties, such as MOF crystallite mean particle size, surface area, porosity, envelope density, relative density, and so on.

For example, the composition may comprise one group of MOF bodies wherein the MOF is HKUST-1 and a second group of MOF bodies wherein the MOF is ZIF-8.

The composition may consist essentially of the or each MOF body of the first aspect; that is further components may be present in the composition, but only those not materially affecting the essential characteristics of the composition. Alternatively, the composition may consist of the or each MOF body of the first aspect.

Preferably, the composition may comprise an additive. The additive may be selected from the group consisting of: graphite flakes, graphene oxide, graphene nanoplatelets, fluorinated graphene, or combinations thereof.

The composition may be provided as a solid, a suspension, preferably a dry powder, or an aqueous suspension. Suspensions herein include colloidal suspensions. Preferably the suspension(s) is(are) a colloidal suspension(s). This may be confirmed by using a red laser to observe the Tyndall effect.

For the avoidance of doubt, embodiments related to the first aspect of the invention apply mutatis mutandis to the second aspect of the invention.

In a third aspect, the invention provides a method of preparing one or more metal-organic framework (MOF) bodies as defined in the first aspect of the invention. The method comprises the steps of: (a) contacting two or more MOF precursors to form one or more MOF crystallites; (b) contacting the one or more MOF crystallites with a dissolved or dispersed in a solvent to provide one or more solvated MOF bodies; and (c) removing at least some of the solvent to form the one or more MOF bodies.

The two or more MOF precursors may be one or more, or a plurality of, metal ions, e.g. metal cations, and one or more, or a plurality of, organic ligands, e.g. multidentate organic ligands.

The one or more, or plurality of, metal ions may be selected from the group consisting of: ions of zirconium, iron, zinc, aluminium, copper, cobalt, magnesium, chromium, titanium, nickel, manganese, magnesium, ruthenium, potassium, thorium, hafnium, gadolinium, neodymium, ytterbium, erbium and mixtures thereof. The metal ions may be provided by a salt of the metal ion, such as ZrCl₄.

The one or more, or plurality of, organic ligands may comprise two or more oxygen and/or nitrogen atoms suitable for donating a pair of electrons to form the two or more coordinate bonds. Preferably, the oxygen atoms may be present as carboxylate or nitro groups. Preferably, the nitrogen atoms may be present as amine groups. Typically, the plurality of organic ligands may be an aromatic carboxylate, an aromatic amine and/or an aromatic nitro. Preferably, the organic ligands may be selected from the group consisting of: 4,4'-bipyridine, imidazole; 2-methylimidazole; 2-ethylimidazole; 2-nitroimidazole; benzimidazole; purine; 1,2,4-triazole, 3-Methyl-1H, 1, 2, 4 triazole , terephthalic acid, 2-aminoterepthalic acid, 2-bromoterephthalic acid, 2-nitroterephthalic acid, 1,3,5-benzenetricarboxylic acid, 2-hydroxyterephthalic acid, 2,5-dihydroxy terephthalic acid, citric acid, oxalic acid, fumaric acid, 3,5-dimethyl-1,2,4-troiazole, pyrazine, Nicotinic acid, Isonicotinic acid, 1-H-pyrazole-3,5-dicarboxylate, biphenyl-4,4'-dicarboxylic acid, naphthalene-2,6-dicarboxylic acid, 4,4'-terphenyldicarboxylate, benzene-1,2,4,5-tetracarboxylic acid, tetracarboxyphenyl porphyrin, 2,5-furandicarboxylic acid, 4,4'-azo-1,2,4-triazole, N,N-Bis(1H-tetrazole-5-yl)-amine, 1,2-bis(4-pyridyl)ethane; 1,2-di(pyridine-4-yl)ethane-1,2-diol; 3-[(trimethylsilyl)ethynyl]-4-[2-(4-pyridinyl)ethenyl]pyridine; 1,2-bis(4-pyridyl)ethyne; 1,4-bis(4 pyridyl)benzene; 3,6-di(pyridin-4-yl)-1,2,4,5-tetrazine; 4-(9-(pyridin-4-yl)anthracen-10-yl)pyridine; 4,4'-bis(4-pyridyl)biphenyl; N,N'-bis(4-pyridyl)pyromellitic diimide; N,N'-di(pyridyl)-1,4,5,8-naphthalenetetracarboxydiimide; 4,4'-bipyrazolyl; 1,4-bis(1H-pyrazol-4-yl)benzene; 4,4'-buta-1,3-diyne-1,4-diylbis(1H-pyrazole); N,N'-bis(1H-pyrazol-4-yl)pyromellitic diimide; N,N'-bis(1H-pyrazol-4-yl)-1,4,5,8-naphthalenetetracarboxydiimide; 4,4'-bis(1H-pyrazol-4-yl)biphenyl; N,N'-bis(1H-pyrazol-4-yl)-1,4-benzenedicarboxamide; 4,4'-benzene-1,4-diylbis(1H-pyrazole); tetrakis (4-carboxyphenyl)porphyrin (TCPP), 1,4-benzenedicarboxylic acid (BDC), 1,3,5-benzenetricarboxylic acid (H₃BTC), 1,3,5,8- (p-benzoate)pyrene linkers (H₄TBAPy), 4',4‴,4ʺ‴,4‴ʺʺ-(ethene-1,1,2,2- tetrayl)tetrakis(([1,1'-biphenyl]-3-carboxylic acid)) (H₄ETTC).

Suitable conditions for contacting steps (a) and (b), e.g. solvent, reaction temperature, reaction time, vary depending on the precursor materials, and such conditions will be within the ambit of the skilled person.

In step (c) the solvent may be partially or fully removed. The solvent may be removed from the solvated MOF bodies by any suitable means. For example, the solvent may be removed by freeze-drying, centrifugation, heating at high temperature (e.g. greater than about 100 °C), or a combination thereof.

The MOF bodies can be subjected to a size reduction step to reduce the size of the MOF bodies prior to use. Such a size reduction step, for example using a cutting mill, can produce smaller adsorbent bodies, such as bodies having a diameter of less than about 2 mm or even less than about 1 mm.

The method of the third aspect of the invention is particularly advantageous as MOF bodies having optimal properties, such as improved stability and robustness, as well as a high density and high surface area, may be prepared even with low levels of binder.

For the avoidance of doubt, embodiments related to the first aspect of the invention apply mutatis mutandis to the third aspect of the invention.

In a fourth aspect, the present invention provides a gas storage vessel comprising the composition according to second aspect or the MOF body(ies) according to the first aspect. Preferably the gas storage vessel comprises one or more: (a) insulation of the external walls; (b) means of heating and cooling the composition; (c) internal baffles; (d) means of restraining the composition in place; (e) a shape such that the composition is more than or equal to about 10 cm from an external wall; (f) means of monitoring pressure and/or temperature; and/or (g) valves to control gas input and output flows.

For the avoidance of doubt, embodiments related to the first and second aspects of the invention apply mutatis mutandis to the fourth aspect of the invention.

In a fifth aspect, the present invention provides the use of the gas storage vessel according to the fourth aspect for the uptake, storage and/or release of a gas. Preferably the gas comprises hydrogen, carbon dioxide, methane, krypton, or a mixture thereof.

In preferred embodiments:
a. the gas comprises hydrogen and the metal-organic framework body or bodies comprises a MOF selected from HKUST-1, ZIF-8, MOF-808, UiO-66 and mixtures thereof, preferably wherein the composition comprises a bulk volumetric composition of MOF of from about 0.6 to about 0.8 g/cm³ and hydrogen of from about 0.04 to about 0.065 g/cm³ at 77 K and 10 atm; or
b. the gas comprises carbon dioxide and metal-organic framework body or bodies comprises a MOF selected from UTSA-16, CALF-20, ZU-301, TIFSIX-3-Ni, NbOFFIVE-1, UiO-66-NH₂ and mixtures thereof, preferably wherein the composition comprises a bulk volumetric composition of MOF of from about 0.6 to about 0.8 g/cm³ and carbon dioxide of from about 0.05 to about 0.1 g/cm³ at 293 K and 5 atm; or
c. the gas comprises krypton and the metal-organic framework body or bodies comprises a MOF selected from MOF-74, preferably MOF-74-Mg, CALF-20, TIFSIX-3-Ni, NbOFFIVE-Ni-1, preferably wherein the composition comprises a bulk volumetric composition of MOF of from about 0.6 to about 0.8 g/cm³ and krypton of from about 0.05 to about 0.1 g/cm³ at 293 K and 5 atm; or
d. the gas comprises methane and the metal-organic framework body or bodies comprises a MOF which is HKUST-1, preferably wherein the composition comprises a bulk volumetric composition of MOF of from about 0.6 to about 0.8 g/cm³ and methane of from about 0.05 to about 0.1 g/cm³ at 293 K and 5 atm; or
e. the gas comprises water and metal-organic framework body or bodies comprises a MOF selected from Al-fumarate, Zr-fumarate, MOF-303, CAU-10, and mixtures thereof, preferably wherein the composition comprises a bulk volumetric composition of MOF of from about 0.6 to about 0.8 g/cm³ and a relative humidity of 10 to 80% at 293 K and 1 atm.

For the avoidance of doubt, embodiments related to the first, second and third aspects of the invention apply mutatis mutandis to the fifth aspect of the invention.

For the avoidance of doubt, embodiments related to each aspect of the invention apply mutatis mutandis to the other aspects of the invention. Further aspects and embodiments of the present invention will be evident from the discussion herein.

### Detailed Description of the Invention

References herein to a singular of a noun encompass the plural of the noun, and vice-versa, unless the context implies otherwise.

Throughout this specification the word 'comprise', or variations such as 'comprises' or 'comprising', will be understood to imply the inclusion of a stated element, integer or step, or group of elements, integers or steps, but not the exclusion of any other element, integer or step, or group of elements, integers or steps. The term 'comprising' includes within its ambit the term 'consisting' or 'consisting essentially of'.

The term 'consisting' or variants thereof is to be understood to imply the inclusion of a stated element, integer or step, or group of elements, integers or steps, and the exclusion of any other element, integer or step or group of elements, integers or steps.

The term 'consisting essentially of' or variants thereof is to be understood to imply the inclusion of a stated element, integer or step, or group of elements, integers or steps, and that further components may be present, but only those not materially affecting the essential characteristics of the embodiment of the invention.

The term 'about' herein, when qualifying a number or value, is used to refer to values that lie within ± 5% of the value specified. For the avoidance of doubt, where a number or value is specified herein in the absence of the term 'about', the number or value should be understood according to standard numeric rounding conventions according to the number of decimal places. For example, a whole number, such as 6, is understood to encompass values ≥ 5.5 and < 6.5. Likewise, a number specified to one decimal place, such as 5.3, is understood to encompass values ≥ 5.25 and < 5.35.

Where a range of values is provided, the range includes the end point values. For example, the range 20 to 28, or from 20 to 28, would include the values 20, 21, 22, 23, 24, 25, 26, 27 and 28; the range 5 to 15, or from 5 to 15, would include the values 5, 6, 7, 8, 9, 10, 11, 12, 13, 14 and 15.

Throughout this application, the IUPAC definitions of micropores (diameter of < 2 nm), meso-pores (diameter of 2 nm - 50 nm) and macropores (diameter of > 50 nm) are used.

When referring to MOF bodies, "body"/"bodies" may be used interchangeably with "monolith"/"monoliths", and the like.

Metal-organic frameworks (MOFs) are materials consisting of coordination bonds between metal ions, e.g. metal cations, and multidentate organic ligands. The MOF structure is characterised by an open framework that may be porous. The metal cations and organic ligands are as described herein.

MOF nanoparticles comprise metal-organic frameworks and display 3D architectures. MOF nanoparticles disclosed herein are very typically spherical or cuboid.

Preferred MOFs for the MOF bodies and MOF crystallites are selected from the group consisting of: HKUST-1, ZIF-8, UTSA-16, CALF-20, ZU-301, UiO-66, MOF-303, Al-fumarate, Zr-fumarate, Al-formate, MOF-808, NbOFFIVE, TIFSIX, CPO-27, UiO-66, MIL-160, CAU-100 and combinations thereof

### Applications of MOF body(ies) of the first aspect of the invention and compositions of the second aspect of the invention

There has been, and continues to be, significant interest in the use of improved sorbents for use in gas storage applications. Separation and purification processes of gases are critical for gas production and storage and applications in which the use of gases with enhanced purity is required, such as air purification, electronics, fine chemicals, fuel cells, power plants, etc (Metal-Organic Frameworks: Applications from Catalysis to Gas Storage, Part II: Gas Storage and Separation Applications, Wiley, July 2011, Ed. D. Farrusseng). Sorbent materials are materials which can adsorb and desorb specific species, such as gases, under specific conditions. Solid sorbents are highly porous and the pores provide the mechanism for adsorbing the target species.

MOFs can be used to adsorb, store and desorb gases. MOFs can offer many performance advantages over current sorbent materials (such as zeolites and activated carbons) and are candidates for improved gas storage systems required for practical transport systems as well as applications such as gas separation, purification and carbon capture. A particular feature of MOFs is their high selectivity for specific species. Specific MOFs can be modified by changing organic linkers and metal ions and fine-tuning the properties to increase their selectivity in adsorbing specific species.

The MOF body(ies) or compositions of the invention may be used for purposes such as gas extraction or gas capture. They may also be used for gas storage and/or gas delivery.

For example, the MOF body(ies) or compositions of the invention may be used to extract, capture, store and/or deliver gases, such as waste gases, from industrial processes. The MOF body(ies) or compositions may be used to extract, capture, store and/or deliver gases such as carbon dioxide from flue gases.

The MOF body(ies) or compositions of the invention may also be used to extract, capture, store and/or deliver other gases such as hydrogen, krypton, or methane.

The MOF body(ies) or compositions may further comprise a gas selected from one of the following carbon dioxide, hydrogen, krypton, methane, and mixtures thereof.

The MOF body(ies) or composition may further comprise hydrogen. When the MOF body(ies) or composition further comprise hydrogen, the MOF body or bodies may comprise a MOF selected from one or more of the following HKUST-1, ZIF-8, MOF-808, ZU-301, UiO-66, and mixtures thereof.

The MOF body(ies) or composition may further comprise carbon dioxide. When the MOF body(ies) or composition further comprises carbon dioxide, the MOF body(ies) may comprise a MOF selected from one or more of the following UTSA-16, CALF-20, ZU-301, TIFSIX-3-Ni, NbOFFIVE-1, UiO-66-NH2, and mixtures thereof.

The MOF body(ies) or composition may further comprise krypton. When the MOF body(ies) or composition further comprises krypton, the MOF body(ies) may comprise a MOF which is MOF-74.

The MOF body(ies) or composition may further comprise methane. When the MOF body(ies) or composition further comprises methane, the MOF body(ies) may comprise a MOF which is HKUST-1.

The MOF body(ies) or composition may further comprise water. When the MOF body(ies) or composition further comprise water, the MOF body(ies) may comprise a MOF selected from one or more of the following: Al-fumarate, Zr-fumarate, MOF-303, CAU-10, and mixtures thereof.

Following use of the MOF body(ies) or compositions for gas capture, storage and/or delivery, they may be regenerated and recycled for further and/or repeated use. For example, the MOF body(ies) or compositions may be regenerated by activation to remove any remaining gases and/or sorbates, and then recycled or re-used either in the same application or a different application.

### Use of the Composition in a Gas Storage Vessel

According to a further aspect of the invention, there is provided a gas storage vessel comprising the MOF body(ies) or the composition.

The gas storage vessel may have a shape that is non-spherical.

The gas storage vessel may further comprise one or more of the following:
a. insulation of the external walls;
b. means of heating and cooling the MOF body(ies) or composition;
c. internal baffles;
d. means of restraining the MOF body(ies) or composition in place;
e. a shape such that the MOF body(ies) or composition is more than or equal to about 10 cm from an external wall to reduce temperature losses;
f. means of monitoring pressure and/or temperature; and/or
g. valves to control gas input and output flows.

### Use of the Gas Storage Vessel

According to a further aspect of the present invention, there is provided a use of the gas storage vessel comprising the MOF body(ies) or composition for the uptake, storage and/or release of a gas.

For example, the gas storage vessel may be used in a method comprising the steps of:
a. filling the gas storage vessel with a gas;
b. storing the gas in the gas storage vessel; and/or
c. releasing the gas from the gas storage vessel.

The steps of this method may be carried out in any order, and the method may comprise any one or more of these steps.

The MOF body(ies) or composition are particularly suited for the sorption and storage of gases for various gas separation and purification applications. Due to the porous nature of the MOF bodies, as well as other properties such as high bulk density, they are particularly suited for demonstrating a high volumetric capacity of gas, which is important for gas storage and separation applications.

The MOF may be selected based on the use of the gas storage vessel. For example, the MOF may have a chemical composition, porosity, pore size etc. that is particularly suited for a certain gas storage and separation application.

The gas may comprise hydrogen, carbon dioxide, methane, krypton, or mixtures thereof. The gas may be (or may consist essentially of or consist of) hydrogen, carbon dioxide, methane, krypton, or a mixture thereof.

The uptake and/or release of the gas may be achieved by:
a. a pressure-swing process; and/or
b. a temperature-swing process.

The gas storage vessel may be used as part of a gas purification process.

### Use for Hydrogen Storage

When the gas comprises hydrogen, for example when the gas is hydrogen, the MOF body(ies) preferably comprise a MOF selected from HKUST-1, ZIF-8, MOF-808, UiO-66, and mixtures thereof.

These MOFs are suitable for the uptake, storage and release of hydrogen, and when used in the composition of the invention, demonstrate excellent performance such as volumetric performance and cycle life.

When the gas comprises hydrogen, for example when the gas is hydrogen, and the MOF body(ies) comprise a MOF selected HKUST-1, ZIF-8, MOF-808, ZU-301, UiO-66, and mixtures thereof, the temperature of the composition may be varied from about -200 to about -100 °C during the uptake and/or release the gas. When the temperature is at about -200 °C, the pressure inside the gas storage vessel may be greater than or equal to about 10 bar. When the temperature is at about -100 °C, the pressure inside the gas storage vessel may be less than or equal to about 1 bar.

When the gas comprises hydrogen, for example when the gas is hydrogen, and the MOF body(ies) comprise a MOF selected from HKUST-1, ZIF-8, MOF-808, ZU-301, UiO-66 and mixtures thereof, the composition may comprise a bulk volumetric composition of MOF of from about 0.6 to about 0.8 g/cm³ and hydrogen of from about 0.04 to about 0.065 g/cm³ at 77 K and 10 atm.

### Use for Carbon Dioxide Storage/Separation

When the gas comprises carbon dioxide, for example the gas is carbon dioxide, the MOF body(ies) may comprise a MOF selected from UTSA-16, CALF-20, ZU-301, TIFSIX-3-Ni, NbOFFIVE-1, UiO-66-NH₂, MIL-160 and mixtures thereof. Preferably, the MOF is ZU-301 and/or UTSA-16. ZU-301 and UTSA-16 demonstrate properties such as high volumetric performance, fast gas kinetics and good stability that are particularly suited for carbon dioxide capture in flue gas purification applications.

When the gas comprises carbon dioxide, for example the gas is carbon dioxide, and the MOF body(ies) comprise a MOF selected from UTSA-16, CALF-20, ZU-301, TIFSIX-3-Ni, NbOFFIVE-1, UiO-66-NH₂, MIL-160 and mixtures thereof, the temperature of the composition may be varied from about 0 to about 100 °C during the uptake and/or release of the gas. When the temperature is at about 20 °C, the pressure inside the gas storage vessel may be from about 1 bar to about 10 bar, or from about 5 bar to about 10 bar. When the temperature is at about 70 °C, the pressure inside the gas storage vessel may be less than or equal to about 1 bar.

When the gas comprises carbon dioxide, for example the gas is carbon dioxide, and the MOF body(ies) comprise a MOF selected UTSA-16, CALF-20, ZU-301, TIFSIX-3-Ni, NbOFFIVE-1, UiO-66-NH₂ and mixtures thereof, the composition may comprise a bulk volumetric composition of MOF of from about 0.6 to about 0.8 g/cm³ and carbon dioxide of from about 0.05 to about 0.1 g/cm³ at 293 K and 5 atm.

When the gas comprises CO₂, the composition may comprise from about 0.03 % to about 30%, or from about 0.04% to about 20%, or from about 0.1% to about 4%, CO₂ by weight of the composition. Lower levels of CO₂ are observed in direct air capture and higher levels are observed in post-combustion carbon capture or carbon capture from cement plants.

When the gas entering the gas storage vessel comprises carbon dioxide, the carbon dioxide content of the gas may be from about 0.1 to about 10 wt%, based on the total weight of the gas.

When the gas entering the gas storage vessel comprises carbon dioxide, the carbon dioxide content of the gas may be from about 10 to about 70 wt%, based on the total weight of the gas.

### Use for Krypton Storage

When the gas comprises krypton, for example the gas is krypton, the MOF body(ies) may comprise a MOF selected from MOF-74, preferably MOF-74-Mg, CALF-20, TIFSIX-3-Ni or NbOFFIVE-Ni-1.

When the gas comprises krypton, for example the gas is krypton, and the MOF body(ies) comprise a MOF selected from MOF-74, preferably MOF-74-Mg, CALF-20, TIFSIX-3-Ni or NbOFFIVE-Ni-1, and mixtures thereof, the temperature of the composition may be varied from about 0 to about 100 °C during the uptake and/or release of the gas. When the temperature is about 20 °C, the pressure inside the gas storage vessel may be greater than or equal to about 5 bar. When the temperature is about 100 °C, the pressure inside the gas storage vessel may be less than or equal to about 1 bar.

When the gas entering the gas storage vessel comprises krypton, the krypton content of the gas may be from about 90 to about 99 wt%, based on the total weight of the gas.

When the gas comprises krypton, for example the gas is krypton, and the MOF body(ies) comprise a MOF selected from MOF-74, CALF-20, TIFSIX-3-NI, NbOFFIVE-1-Ni, and mixtures thereof, the composition may comprise a bulk volumetric composition of MOF of from about 0.6 to about 0.8 g/cm³ and krypton of from about 0.05 to about 0.1 g/cm³ at 293 K and 5 atm.

### Use for Methane Storage

When the gas comprises methane, for example the gas is methane, the MOF body(ies) may comprise a MOF which is HKUST-1.

When the gas comprises methane, for example the gas is methane, and the MOF body(ies) comprise HKUST-1, the temperature of the composition may be varied from about 0 to about 100 °C during the uptake and/or release of the gas. When the temperature is about 20 °C, the pressure inside the gas storage vessel may be greater than or equal to about 5 bar. When the temperature is greater than or equal to about 95 °C, the pressure inside the gas storage vessel may be less than or equal to about 1 bar.

When the gas comprises methane, for example the gas is methane, and the MOF body(ies) comprise HKUST-1, the composition may comprise a bulk volumetric composition of MOF of from about 0.6 to about 0.8 g/cm³ and methane of from about 0.05 to about 0.1 g/cm³ at 293 K and 5 atm.

### Use for Water Harvesting of Heating, Ventilation, and Air Conditioning (HVAC) solutions

When the gas comprises water e.g. water vapour or steam, for example the gas is humid air, the MOF body(ies) may comprise a MOF selected from Al-fumarate, Zr-fumarate, MOF-303, CAU-10, and mixtures thereof.

When the gas comprises water e.g. water vapour or steam, for example the gas is humid air and the MOF body(ies) comprise a MOF selected from Al-fumarate, Zr-fumarate, MOF-303, CAU-10, and mixtures thereof, the composition may comprise a bulk volumetric composition of MOF of from about 0.6 to about 0.8 g/cm³ and a relative humidity of 10 to 80% at 293 K and 1 atm.

### Experimental Methods

Unless otherwise mentioned, room temperature and pressure are 20 °C (293.15 K, 68 °F) and 1 atm (14.696 psi, 101.325 kPa), respectively.

### Gas uptake

N₂ adsorption isotherm measurements were performed on a Micromeritics 3-Flex analyzer at 77 K (-196.15 °C). Around 80 mg samples were used for each measurement. Prior to the measurement, all the samples were degassed under vacuum at 120 °C for 24 hours using the internal turbopump. Gas uptakes were performed on the air-dried samples. The BET areas were calculated using BETSI as described in Osterrieth, J. W. M. et al., Advanced Materials, 2022, 34, 2201502

### Measurement of crystallite sizes by microscopic analysis

A preferred way to measure the dimensions of the MOF crystallites after formation into a larger MOF body, is to use microscopic examination using SEM or TEM equipment. Suitable TEM equipment includes the JEOL JEM 2100. Suitable SEM equipment includes the FEI Quanta 3D.

Typically, the particle size distribution of the MOF crystallites comprising the MOF body is measured by breaking the MOF body into smaller fragments to expose internal surfaces, sieving the fragments to between 500 microns and 250 microns, and mounting the fragments onto the microscope stub. The MOF crystallites making up the MOF body retain discernible individual dimensions, and these can be seen forming the various exposed surfaces. The diameter of a crystallite of MOF can be measured by visual examination by drawing the longest possible line between diametrically opposing internal surfaces. Preferably, software analysis software such as imaged can be used. Typically, at least 50 observations of separate particles will need to be made to give statistically valid results for the particle size distribution. Typically, multiple (e.g., at least five) different surfaces need to be examined from at least ten randomly selected particles within the field of view of each surface. Statistical analysis can then be used determine the mean particle size and other parameters of the size distribution.

### Mean particle size measurement by SAXS

Alternatively, the mean particle size of the crystallites in the MOF body can also be measured using SAXS if synchrotron equipment is available. If there is any discrepancy between SAXS and optical methods, SAXS values are to be used.

The particle size distribution of the adsorbent particles forming the adsorbent body can be characterised by SAXS measurements of the adsorbent body. In principle, in a SAXS experiment, the light is scattered as a result of the contrast in electron density between two phases. Based on this, one can calculate the size of an equivalent spherical particle, or other shapes. The SAXS intensity at a particular angle depends on the electron density contrast. It also depends on the size of the particles. Large particles scatter at low angles and small particles scatter at larger angles. To generate a measurement, pieces of adsorbent material are mounted on a sample holder. For SAXS, the X-rays are produced by synchrotron radiation. One or more sets of data are collected to cover the whole range in scattering angle. A Kratky instrument can be used to collect small-angle scattering at the larger scattering angles (1.0e-1 to 4.0e0 degrees). A Bonse Hart instrument can be used to collect small-angle scattering at the smaller scattering angles (2.2e-3 to 5e-1 degrees). In this case, the two datasets are combined into a single scan after background subtraction, and the data are subsequently de-smeared. These de-smeared data are then transformed to a volume size distribution function by the regularization technique. The volume distribution function is the final output of this procedure.

### Dynamic light scattering (DLS)

The particle size distribution of the framework crystallites when in the reaction mix can be measured by Dynamic Light Scattering. Suitable equipment includes the NANO-flex II from Colloid Metrix operated according to manufacturer's instructions. The sample probe can be inserted directly in the reaction mix after the reaction period. Dilution of the reaction mix is required to ensure that the mix being measured has a solids level of 20 - 25wt%.

### Measurement of Aspect Ratio (and Cross-Sectional Diameter)

The (largest and smallest) cross-sectional diameters and aspect ratio of the extrudates may be measured by dynamic image analysis. Suitable equipment is the Camsizer P4 from Microtrac MRB operated according to manufacturer's instructions. Such equipment has been shown to be comparable to a caliper measurement of a sample.

A sample, preferably >50 mL, is conveyed by a vibratory chute into the measurement zone where they pass in front of a planar light source in free fall. The resulting shadow projections are captured by a camera system and evaluated in real time. This allows the simultaneous measurement of the lengths and widths of the extrudates as well as their shape. The conveying along the vibratory chute helps align the extrudates for analysis.

The width of an extrudate is most conveniently defined as the smallest area bisector (*X_{Ma min}* - the smallest Martin diameter). This is viable even if the extrudate is bent or partially rounded. Extrudate length or *X_{stretch}* is conveniently defined as the square root of the product of the maximum Feret diameter (*X_{Fe max}*) squared minus the minimum Martin diameter (*X_{Mamin}*) squared. The maximum Feret diameter (*X_{Fe max}*) is the longest distance between two parallel lines touching the body projection.

The particle aspect ratio is therefore *X_{stretch}*/*X_{Ma min}.*

Equipment such as the Camsizer P4 will give a distribution of extrudate lengths (*X_{stretch}*) and widths (X*_{ma min}*). The extrudate widths will be very monodispersed.

In the context of the disclosure, the mean aspect ratio will be understood by the skilled person to include the weight-based mean aspect ratio, or the volume-based mean aspect ratio, that is a mean aspect ratio characterised and defined from a aspect ratio distribution by weight, or volume, respectively. For example, the aspect ratio distribution may be a cumulative aspect ratio distribution, wherein the cumulative aspect ratio distribution is a fraction of bodies (based on weight, or volume) with aspect ratios less than a certain value. Preferably, the mean particle aspect ratio is a volume-based mean-particle aspect ratio.

The mean particle aspect ratio may be the "A50 aspect ratio" based on the volume-related cumulative distribution wherein 50% of the particles have an aspect ratio less than the A50 particle aspect ratio.

### Method for measuring the envelope density of an adsorbent body

The envelope density of a body can be measured by dividing the weight of a body (in grams) by its envelope volume (in mm³). The envelope volume is defined in ASTM D3766 as "the ratio of the mass of a particle to the sum of the volumes of the solid in each piece and the voids within each piece, that is, within close-fitting imaginary envelopes completely surrounding each piece". The envelope density of a body can be measured using techniques based on the Archimedes principle of volume displacement. For example, the envelope density can be measured by mercury porosimetry. At atmospheric pressure, mercury does not intrude into internal pores. Therefore, the volume of mercury displaced by a body at atmospheric pressure is the envelope volume of the body. Dividing the weight of the sample by this volume gives the envelope density. The use of mercury porosimetry is described above.

An alternative, and viable, technique for larger bodies, typically those with a diameter > 2 mm, is to use accurate 3-D scanners to measure the body volume. Suitable equipment includes the Leica BLK360. Preferably, powder pycnometers, such as the GeoPyc Model 1360 from Micrometrics Instrument Corp, can also be used to measure the envelope volumes and densities of bodies. If need be, the envelope volumes measured by these techniques can be used interchangeably with the envelope volume measured by mercury porosimetry.

### Method for Measuring Relative density

Relative density refers to the ratio of the envelope density of a crystalline adsorbent body compared to the crystal density of the adsorbent material.

The crystal density of a MOF is the density of a single crystal and is calculated theoretically from the structure. Structural and other information for MOFs, such as single crystal density, is theoretically calculated. Crystal density data is available from the Cambridge Structural Database at the Cambridge Crystallographic Centre.

Relative densities of much less than 1, such as less than 0.3, mean that there is excess porosity, mostly in the form of larger (hence less useful) pores in the body. Relative densities greater than 1 imply a wasteful loss of porosity as such high values can only be achieved by destroying some of the useful pores.

### Method of Measuring Bulk Density

The bulk density (tapped density) of the composition may be determined by loading a cylinder with a weighted amount of sample and tapping at least 50 times. The resulting volume of the packed material is then determined and the bulk density is calculated by dividing the sample weight by the sample volume. The diameter of the cylinder needs to be several times (>3) greater than the average length of any extrudates to allow packing. Cylinders of containers having a diameter of about 3 cm or greater are suitable. The depth of the packed bed also needs to be greater than about 3 cm to allow packing.

Due to the size and nature of the composition, only a limited amount of tapping or movement is required to pack the bodies efficiently. Increased amounts of tapping and different intensities of tapping, such as in some standards, do not significantly change the packing density.

The tapped density may be defined by methods such as the MPIF-46, ASTM B-527 or ISO 3953 tap density methods.

### Method for determining the level of organic binder in an adsorbent body

The level of the organic binder in a MOF body can be determined by thermo-gravimetric methods based on weight loss at elevated temperatures. The high temperatures used (600°C) will burn off the organic species leaving metal oxide species etc behind. The difference in % weight loss between a sample of the adsorbent material and a sample of the adsorbent material plus binder shows the level of binder. The adsorbent body is crushed and a sample of the adsorbent body material is heated up to 600 °C and the weight loss when at steady state is measured and normalised. A sample of the adsorbent material is then heated under identical conditions and the weight loss normalised. The difference between the % wt losses is the % of binder present.

Residual solvent levels in a sample can be determined by weight loss of the sample after heating the sample to 120°C for 12 hours under vacuum. Binder level in the sample can then be determined by thermo-gravimetric analysis as previously described.

### Method of measuring macroporosity by mercury porosimetry

The mercury porosity values can be measured according to ASTM D4284-12. Suitable equipment for carrying out ASTM D4284-12 include the Micromeritics AutoPore VI 9510 from Micromeritics Corp, USA. Other suitable equipment includes the PoreMaster series from Quantachrome. Unless otherwise specified by the equipment manufacturer, the default surface tension and contact angle of mercury are taken as being 485 mN/m and 130°, respectively. In ASTM D4284-12, mercury is forced into pores under pressure. A sample size of ~ 0.2 g is preferably used. The MOF bodies are preferably fragmented and sieved between 710 microns and 250 microns, and the sieved material used.

The pressure required to force mercury into the pores of the sample is inversely proportional to the size of the pores according to the Washburn equation. It is assumed that all pores are cylindrical for the purpose of characterisation. The porosimeter increases the pressure on the mercury inside the sample holder to cause mercury to intrude into increasingly small sample pores. The AutoPore VI or other suitable equipment will automatically translate the applied pressures into equivalent pore diameters using the Washburn equation and the values of contact angle and surface tension given above.

The envelope volume may be measured using techniques based on the Archimedes principle of volume displacement. The envelope volume of the sample is determined by the volume of mercury displaced at atmospheric pressure. At atmospheric (101.325 KPa) pressure, mercury does not intrude into internal pores, just external pores. Therefore, the volume of mercury displaced by a body at 101 KPa pressure may be used as the envelope volume.

As the applied pressure is increased, mercury is forced into smaller internal pores. A pressure of 292 atmospheres (2.96 ×10⁴ KPa) is sufficient to force mercury into pores of 50nm and larger. Therefore, the % level of macroporosity of a sample is the % Hg Intrusion Porosity at 2.96 × 10⁴ KPa minus the % Hg Intrusion Porosity at 101 KPa.

Mercury porosimetry is not suitable for measuring micro and meso-porosity as the pressures required to force mercury into the small pores are too high to be practical.

### Method of Measuring Micro-porosity and Meso-porosity

The micro and meso-porosity profile of a body can be determined by test method ASTM D4641-17. Suitable equipment for carrying out such tests is the 3Flex, from Micromeritics Corporation. The test method is as follows.

The test sample (0.5g) is typically heated to 120 °C under vacuum to remove adsorbed gases and vapours from the surface. The nitrogen adsorption branch of the isotherm is then determined by placing the sample under vacuum, cooling the sample to the boiling point of liquid nitrogen (-77.3 K), and then adding, in a stepwise manner, known amounts of nitrogen gas at increasing pressure P to the sample in such amounts that the form of the adsorption isotherm is adequately defined, and the saturation pressure of nitrogen is reached.

Each additional dose of nitrogen is introduced to the sample only after the preceding dose of nitrogen has reached adsorption equilibrium with the sample.

Typically, equilibrium is reached if the change in gas pressure is no greater than 0.1 torr/5 min interval. This is continued until P₀ (the gas saturation pressure) is reached.

Data is typically plotted as the amount of gas adsorbed/desorbed (and derived porosity profiles) as a function of P/P₀. The desorption isotherm is determined by desorbing nitrogen from the saturated sample in a stepwise manner with the same precautions taken to ensure desorption equilibration as those applied under adsorption conditions. Microporosity is associated with the volume of gas adsorbed at P/P₀ values of < 0.1 whereas mesoporosity is associated with the volume of gas adsorbed at P/P₀ values between 0.1 and 0.98.

Every document cited herein, including any cross-referenced or related patent or application, is hereby incorporated by reference in its entirety unless expressly excluded or otherwise limited.

It will be appreciated that various modifications may be made to the embodiments shown without departing from the spirit and scope of the invention as defined by the accompanying claims.

## Claims

1. A metal-organic framework (MOF) body or bodies,
wherein the or each MOF body comprises MOF crystallites and binder;
wherein the MOF crystallites comprise MOF comprising a plurality of metal ions and a plurality of organic ligands;
wherein the MOF crystallites have a mean particle size of from about 20 nm to about 400 nm;
wherein the or each MOF body comprises less than about 20% binder by weight of the or each MOF body.

2. The or each MOF body according to claim 1, wherein the or each MOF body comprises greater than about 80% MOF, preferably greater than about 90% MOF or more preferably greater than about 95% MOF or even more preferably greater than about 97% MOF by weight of the or each MOF body.

3. The or each MOF body according to claim 1 or claim 2, wherein the or each MOF body comprises
a. from about 1% to about 20% binder by weight of the or each MOF body, preferably from about 2% to about 10% binder by weight of the or each MOF body, or
b. less than about 5% binder by weight of the or each MOF body.

4. The or each MOF body according to any preceding claim wherein, when the mean particle size of the MOF crystallites is less than about 100 nm and/or the level of binder is less than about 10% by weight of the or each MOF body, preferably less than about 5% by weight of the or each MOF body.

5. The or each MOF body according to any preceding claim, wherein the binder is (i) water soluble, and/or (ii) an organic binder, preferably wherein the organic binder is a polymeric organic binder selected from the group consisting of: polyvinyl alcohol (PVA), polyvinyl acetate, polyethyleneimine, polyvinyl pyrrolidone, polyimide (PI), polyvinyl formal, polyacrylic acid and salts thereof, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefins, polyamide, chitosan, cellulose acetate, hydroxypropyl methyl cellulose (HPMC), methyl cellulose, hydroxyethyl cellulose, hydroxypropyl methylcellulose phthalate (HPMCP), and any combination thereof.

6. The or each MOF body according to claim 5, wherein the organic binder is the same as the organic ligand.

7. The or each MOF body according to any preceding claim, wherein the MOF is selected from the group consisting of: HKUST-1, ZIF-8, UTSA-16, CALF-20, ZU-301, UiO-66, MOF-303, Al-fumarate, Zr-fumarate, Al-formate, MOF-808, NbOFFIVE, TIFSIX, CPO-27, UiO-66, MIL-160, CAU-10 and combinations thereof.

8. The or each MOF body according to any preceding claim, wherein (i) the external surface of the MOF crystallites is at least partially coated with binder, and/or the MOF crystallites are adhered to each other with binder.

9. The or each MOF body according to any preceding claim, wherein the or each MOF body is an extrudate, a milled granule, a tablet or an agglomerate, preferably wherein
(a) the or each MOF body is an extrudate having (i) an aspect ratio of from about 1 to about 7, and/or (ii) a cross-sectional diameter of from about 1 mm to about 5 mm; or
(b) the or each MOF body is a milled body having a mean body size of greater than about 0.25 mm, preferably greater than about 0.4 mm.

10. The or each MOF body according to any preceding claim, wherein the or each MOF body has (i) a BET area of greater than about 400 m²/g as measured by N₂ adsorption at 77 K, and/or (ii) a BET area greater than about 65% of the BET area of the MOF powder as measured by nitrogen adsorption at 77 K, and/or (iii) a relative density of greater than about 65% of the theoretical, single-crystal density, and/or (iv) a volume of macropores of 15% or less of the envelope volume of the MOF body.

11. A composition comprising a metal-organic framework body or bodies as defined in any one of the preceding claims.

12. A method of preparing one or more metal-organic framework (MOF) bodies as defined in any one of claims 1 to 10, the method comprising the steps of:
a. contacting two or more MOF precursors to form one or more MOF crystallites;
b. contacting the one or more MOF crystallites with a binder dissolved or dispersed in a solvent to provide one or more solvated MOF bodies;
c. removing at least some of the solvent to form the one or more MOF bodies.

13. A gas storage vessel comprising the composition according to claim 11, preferably wherein the gas storage vessel comprises one or more:
a. insulation of the external walls;
b. means of heating and cooling the composition;
c. internal baffles;
d. means of restraining the composition in place;
e. a shape such that the composition is more than or equal to about 10 cm from an external wall;
f. means of monitoring pressure and/or temperature; and/or
g. valves to control gas input and output flows.

14. Use of the gas storage vessel according to claim 13 for the uptake, storage and/or release of a gas, preferably wherein the gas comprises hydrogen, carbon dioxide, methane, krypton, or a mixture thereof.

15. The use according to claim 14 wherein
a. the gas comprises hydrogen and the metal-organic framework body or bodies comprises a MOF selected from HKUST-1, ZIF-8, MOF-808, UiO-66 and mixtures thereof, preferably wherein the composition comprises a bulk volumetric composition of MOF of from about 0.6 to about 0.8 g/cm³ and hydrogen of from about 0.04 to about 0.065 g/cm³ at 77 K and 10 atm; or
b. the gas comprises carbon dioxide and metal-organic framework body or bodies comprises a MOF selected from UTSA-16, CALF-20, ZU-301, TIFSIX-3-Ni, NbOFFIVE-1, UiO-66-NH₂, MIL-160, and mixtures thereof, preferably wherein the composition comprises a bulk volumetric composition of MOF of from about 0.6 to about 0.8 g/cm³ and carbon dioxide of from about 0.05 to about 0.1 g/cm³ at 293 K and 5 atm; or
c. the gas comprises krypton and the metal-organic framework body or bodies comprises one or more MOFs selected from MOF-74, preferably MOF-74-Mg, CALF-20, TIFSIX-3-Ni, NbOFFIVE-Ni-1, and mixtures thereof, preferably wherein the composition comprises a bulk volumetric composition of MOF of from about 0.6 to about 0.8 g/cm³ and krypton of from about 0.05 to about 0.1 g/cm³ at 293 K and 5 atm; or
d. the gas comprises methane and the metal-organic framework body or bodies comprises a MOF which is HKUST-1, preferably wherein the composition comprises a bulk volumetric composition of MOF of from about 0.6 to about 0.8 g/cm³ and methane of from about 0.05 to about 0.1 g/cm³ at 293 K and 5 atm; or
e. the gas comprises water and metal-organic framework body or bodies comprises a MOF selected from Al-fumarate, Zr-fumarate, MOF-303, CAU-10, and mixtures thereof, preferably wherein the composition comprises a bulk volumetric composition of MOF of from about 0.6 to about 0.8 g/cm³ and a relative humidity of 10 to 80% at 293 K and 1 atm.
